(19) Europäisches Patentamt
European Patent Office
Office européen des brevets

(11) Veröffentlichungsnummer: **0 087 705**
**B1**

(12) # EUROPÄISCHE PATENTSCHRIFT

(45) Veröffentlichungstag der Patentschrift: **04.09.85**

(51) Int. Cl.⁴: **C 09 B 67/42**

(21) Anmeldenummer: **83101619.1**

(22) Anmeldetag: **21.02.83**

(54) **Präparationen wasserlöslicher organischer Farbstoffe.**

(30) Priorität: **03.03.82 DE 3207533**

(43) Veröffentlichungstag der Anmeldung: **07.09.83 Patentblatt 83/36**

(45) Bekanntmachung des Hinweises auf die Patenterteilung: **04.09.85 Patentblatt 85/36**

(84) Benannte Vertragsstaaten: **CH DE FR GB LI**

(56) Entgegenhaltungen:
**DE - A - 2 529 658**
**FR - A - 2 193 065**
**FR - A - 2 277 126**

(73) Patentinhaber: **BAYER AG, Konzernverwaltung RP Patentabteilung, D-5090 Leverkusen 1 Bayerwerk (DE)**

(72) Erfinder: **Wolff, Joachim, Dr., Neuenhauserweg 6, D-5060 Bergisch-Gladbach 2 (DE)**
Erfinder: **Wolf, Karlheinz, Dr., Paul-Klee-Strasse 77, D-5090 Leverkusen 1 (DE)**
Erfinder: **Hörnle, Reinhold, Dr., Hufelandstrasse 42, D-5000 Köln 80 (DE)**

**EP 0 087 705 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind Farbstofflösungen, enthaltend:

10-45 Gewichtsprozent eines wasserlöslichen Reaktivfarbstoffs
1-30 Gewichtsprozent Dialkyl($C_1$-$C_4$)sulfon
25-89 Gewichtsprozent Wasser
0- 3 Gewichtsprozent Puffersubstanzen sowie gegebenenfalls zusätzliche wasserlösliche konzentrationserhöhende Zusatzstoffe.

Die Farbstoffe enthalten als wasserlöslich machende Gruppe eine oder mehrere COOH-Gruppen, bevorzugt aber $SO_3H$-Gruppen oder deren Salze, wie Ammonium-, Li-, Na- oder K-Salze. Die Farbstoffe können der Phthalocyanin-, Nitro-, Di- oder Triphenylmethan-, Oxazin-, Thiazin-, Dioxazin-, Xanthen-, vor allem aber der Anthrachinon- und Azo-Reihe wie der Monoazo-, Diazo- oder Polyazoreihe angehören. Geeignete Reaktivfarbstoffe sind z. B. in „Colour Index", 3. Ed., Vol. 4, S. 4119-4121, beschrieben. Die genannten Reaktivfarbstoffe enthalten faserreaktive Gruppen.

Unter faserreaktiven Gruppen werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen. Derartige faserreaktive Gruppierungen sind aus der Literatur in grosser Zahl bekannt.

Geeignete Reaktivgruppen, welche mindestens einen abspaltbaren Substituenten an einen heterocyclischen oder an einen aliphatischen Rest gebunden enthalten, sind unter anderem solche, die mindestens einen reaktiven Substituenten an einen 5- oder 6gliedrigen heterocyclischen Ring gebunden enthalten, wie an einen Monoazin-, Diazin-, Triazin-, z. B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ringsystem; die 5- oder 6gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschliesslich Hydrazinium, Sulfonium, Sulfonyl, Azido-($N_3$), Rhodanido, Thio, Thiolether, Oxyether, Sulfinsäure und Sulfonsäure.

Bevorzugt sind im Falle der vorliegenden Erfindung Reaktivfarbstoffe mit Reaktivgruppen auf Basis folgender Systeme:

Mono- oder Dihalogen-symmetrische Triazinylreste, Mono-, Di- oder Trihalogenpyrimidinylreste oder halogen-substituierte Chinoxalinylcarbonylreste oder Reaktivreste auf Vinylsulfonbasis.

Insbesondere bevorzugt sind folgende Reaktivgruppen der Formeln II, III, IV und V:

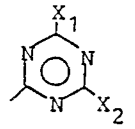
(II)

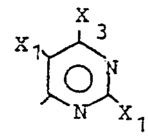
(III)

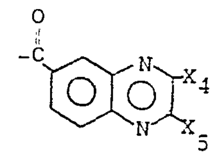
(IV)

$$-SO_2-CH_2-CH_2-OSO_3H \qquad (V)$$

wobei in den Formeln II, III und IV gilt:
$X_1$ = Cl, F
$X_2$ = Cl, F, $NH_2$, NHR, OR, $CH_2R$, SR
$X_3$ = Cl, F, $CH_3$
$X_4$ = Cl, F, $CH_3$
und
$X_5$ = Cl, F, $CH_3$
wobei $X_4$ und $X_5$ nicht gleichzeitig für $CH_3$ stehen dürfen und wobei:

R = Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl), Aralkyl (insbesondere gegebenenfalls durch $SO_3H$, $C_1$-$C_4$-Alkyl, $C_1$-$C_4$-Alkoxy substituiertes Benzyl).

Farbstoffe, welche die obengenannten Reaktivgruppensysteme enthalten, sind beispielsweise aus folgenden Publikationen bekannt: US-PS Nr. 3377336, US-PS Nr. 3527760, GB-PS Nr. 1169254, US-PS Nr. 3669951, DE-PS Nr. 1644208, GB-PS Nr. 1188606, DE-OS Nr. 2817780, ES-PS Nr. 479771.

Die sulfonsäuregruppentragenden Farbstoffe können beispielsweise als Natrium-, Kalium- oder Lithiumsalze eingesetzt werden.

Die erfindungsgemässen konzentrierten Lösungen können solche konzentrationserhöhende Zusatzstoffe enthalten, die zu keiner Reaktion mit der faserreaktiven Gruppe fähig sind. Bevorzugt sind dies:

ε-Caprolactam, N-Methylpyrrolidon, γ-Butyrolacton, Dimethylformamid, Ethylencarbonat, Polyvinylpyrrolidon, Harnstoff, Thioharnstoff und deren Derivate.

Geeignet sind ferner als Zusatzstoffe nichtionogene Tenside wie langkettige oxethylierte Amine, Alkohole und Phenole sowie Lösungsmittel wie

Essigsäure, Ameisensäure bzw. Mischungen derselben.

Gegenstand der Erfindung ist ferner die Verwendung der erfindungsgemässen konzentrierten Farbstofflösung zur Bereitung eines Färbebades oder einer Druckpaste für das Färben oder Bedrukken von synthetischen oder natürlichen Substraten.

Es ist bereits bekannt, konzentrierte Lösungen von Reaktivfarbstoffen unter Verwendung von Dimethylsulfoxid und von cyclischen Sulfonen (wie z. B. Tetramethylensulfon) herzustellen. Siehe dazu z. B. DE-OS Nr. 2335512 und DE-OS Nr. 2529658. Die erfindungsgemässen Lösungen sind überraschenderweise stabiler als die bekannten.

Im einzelnen erfolgt die Herstellung der erfindungsgemässen Lösungen so, dass der Farbstoff in feuchter oder trockener Form, beispielsweise als feuchter Presskuchen in eine Lösung aus Dimethylsulfon und Wasser, gegebenenfalls unter Beimengung konzentrationserhöhender Zusatzstoffe bei leicht erhöhter Temperatur gelöst und gegebenenfalls filtriert wird. Anstelle des Presskuchens bzw. trockenen Farbstoffpulvers kann auch bevorzugt ein salzarmes Konzentrat, das durch Druckpermeation hergestellt wurde, bzw. Mischungen dieser Formen, eingesetzt werden.

Eine weitere Herstellungsmöglichkeit für die erfindungsgemässe konzentrierte Farbstofflösung besteht darin, Dialkyl($C_1$-$C_4$)sulfon der am Ende der Farbstoffsynthese vorliegenden Farbstofflösung oder -suspension zuzusetzen, gegebenenfalls unter Beimengung weiterer konzentrationserhöhender Zusatzstoffe.

*Herstellungsbeispiele*

*Beispiel 1:*

16,5 Gewichtsteile des trocknen Reaktivfarbstoffs der Formel:

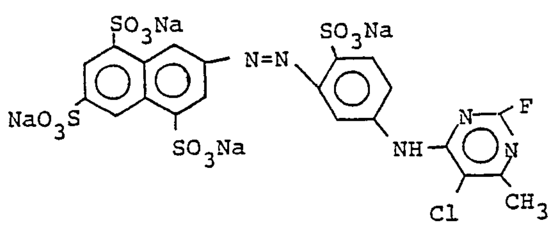

werden in eine Lösung aus 10 Gewichtsteilen Dimethylsulfon, 0,5 Gewichtsteilen Phosphatpuffer (für pH = 7) und 73 Gewichtsteilen Wasser bei leicht erhöhter Temperatur eingetragen und gerührt. Nach Abkühlen wird die fast klare Lösung filtriert. Das Filtrat stellt eine lagerstabile konzentrierte Lösung dar.

Wird anstelle des Dimethylsulfons Tetramethylensulfon (98%) verwendet, so sind nach 4 Wochen Lagerung bei 50°C 25% des Reaktivfarbstoffs hydrolysiert. Bei der erfindungsgemässen konzentrierten Lösung mit Dimethylsulfon sind im Vergleich dazu unter diesen Bedingungen lediglich 4% des Reaktivfarbstoffs der obigen Formel hydrolysiert.

Unter Zusatz der für den Reaktivdruck üblichen Hilfsmittel erhält man mit Dimethylsulfon eine Farbstoffpräparation zum Bedrucken von natürlichen und regenerierten Cellulosefasern in rotstichig gelben Tönen.

*Beispiel 2:*

25 Gewichtsteile des salzarmen Reaktivfarbstoffs der Formel:

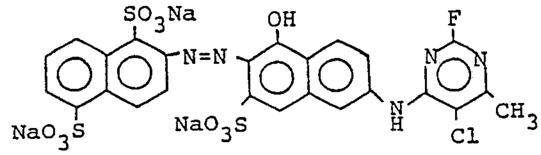

(Salzanteil: <5%) werden in eine Lösung aus 10 Gewichtsteilen Dimethylsulfon, 0,5 Gewichtsteilen Phosphatpuffer (pH 7) und 64,5 Gewichtsteile Wasser eingetragen und verrührt. Nach Abfiltrieren von geringen Anteilen fester Rückstände erhält man eine lagerstabile Lösung des Reaktivfarbstoffs der obigen Formel. Unter Zusatz der für den Reaktivdruck üblichen Hilfsmittel eignet sich diese Farbstoffpräparation zum Bedrucken von natürlichen und regenerierten Cellulosefasern in orangen Tönen.

*Beispiel 3:*

14 Gewichtsteile des salzarmen Reaktivfarbstoffs der Formel:

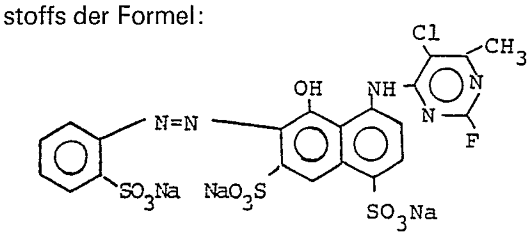

(Salzanteil: <5%) werden in eine Lösung aus 12 Gewichtsteilen Dimethylsulfon, 0,5 Gewichtsteilen Phosphatpuffer (pH 7) und 63,5 Gewichtsteilen Wasser eingerührt. Nach Abfiltrieren von geringen Anteilen fester Rückstände erhält man eine lagerstabile Lösung des Reaktivfarbstoffs.

Wird an Stelle von Dimethylsulfon Dimethylsulfoxid oder Tetramethylensulfon (98%) mit gleichen Gewichtsteilen wie vorstehend angegeben verwendet, so sind nach einer Zeit von 4 Wochen (Lagerung bei 50°C) bereits 30% des Reaktivfarbstoffs hydrolysiert. Bei einer Lagerung bei 0°C fällt bei der Dimethylsulfoxid-Präparation der Reaktivfarbstoff der letztgenannten Formel irreversibel aus.

Die erfindungsgemässe Lösung mit Dimethylsulfon enthält nach 4 Wochen Lagerung (bei 50°C) lediglich 10% hydrolysierten Farbstoff.

Unter Zusatz der für den Reaktivdruck üblichen Hilfsmittel eignet sich diese Farbstoffpräparation mit Dimethylsulfon zum Bedrucken von natürlichen und regenerierten Cellulosefasern in roten Tönen.

*Beispiel 4:*

19 Gewichtsteile des Reaktivfarbstoffs der Formel:

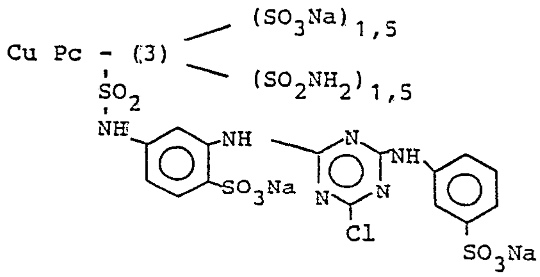

werden in einer Lösung aus 10 Gewichtsteilen Dimethylsulfon, 0,5 Gewichtsteilen Phosphatpuffer (pH 7) und 70,5 Gewichtsteilen Wasser eingetragen und verrührt. Nach Abfiltrieren von geringen Anteilen fester Rückstände erhält man eine lagerstabile Lösung des Reaktivfarbstoffs der letztgenannten Formel. Unter Zusatz der für den Reaktivdruck üblichen Hilfsmittel erhält man eine Farbstoffpräparation zum Bedrucken von natürlichen und regenerierten Cellulosefasern in türkisem Ton.

*Beispiel 5:*

15 Gewichtsteile des salzhaltigen Reaktivfarbstoffs der Formel:

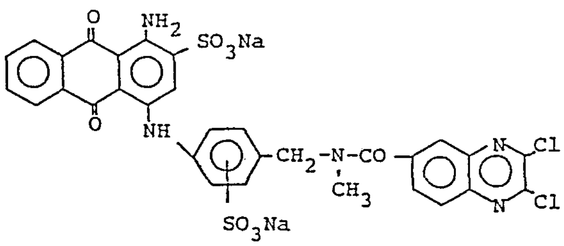

(Salzanteil: <5%) werden in einer Lösung aus 12 Gewichtsteilen Dimethylsulfon, 0,5 Gewichtsteilen Puffer (pH 8) und 72,5 Gewichtsteilen Wasser verrührt. Nach Abfiltrieren von geringen Anteilen fester Rückstände erhält man eine lagerstabile Lösung des Reaktivfarbstoffs der letztgenannten Formel. Nach Einrühren dieser Formierung in Wasser unter Zusatz der für die Reaktivfärberei üblichen Hilfsmittel erhält man eine Farblösung, welche für das Färben von natürlichen und regenerierten Cellulosefasern in blauem Ton geeignet ist.

## Patentansprüche

1. Farbstofflösungen, enthaltend

| | |
|---|---|
| 10-45 | Gewichtsprozent eines wasserlöslichen Reaktivfarbstoffs |
| 1-30 | Gewichtsprozent Dialkyl($C_1$-$C_4$)sulfon |
| 25-89 | Gewichtsprozent Wasser |
| 0-3 | Gewichtsprozent Puffersubstanzen sowie gegebenenfalls zusätzliche wasserlösliche konzentrationserhöhende Zusatzstoffe. |

2. Farbstofflösungen gemäss Anspruch 1, dadurch gekennzeichnet, dass es sich bei dem Reaktivfarbstoff um einen anionischen Reaktivfarbstoff handelt, der eine Reaktivgruppierung einer der folgenden Formeln enthält:

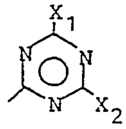 (II)

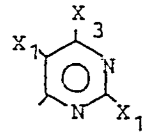 (III)

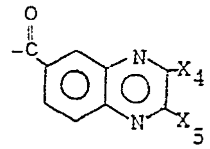 (IV)

$-SO_2-CH_2-CH_2-OSO_3H$ (V)

wobei in den Formeln (II), (III) und (IV) gilt:
$X_1$ = Cl, F
$X_2$ = Cl, F, $NH_2$, NHR, OR, $CH_2R$, SR
$X_3$ = Cl, F, $CH_3$
$X_4$ = Cl, F, $CH_3$
$X_5$ = Cl, F, $CH_3$
wobei $X_4$ und $X_5$ nicht gleichzeitig für $CH_3$ stehen dürfen und wobei R = Alkyl, Aryl, Aralkyl.

## Claims

1. Dyestuff solutions, containing

| | |
|---|---|
| 10-45 | percent by weight of a water-soluble reactive dyestuff, |
| 1-30 | percent by weight of dialkyl($C_1$-$C_4$) sulphone, |
| 25-89 | percent by weight of water, |
| 0-3 | percent by weight of buffer substances and, if appropriate, additional water-soluble, concentration-increasing additives. |

2. Dyestuff solutions according to Claim 1, characterised in that the reactive dyestuff is an anionic reactive dyestuff which contains a reactive grouping of one of the following formulae:

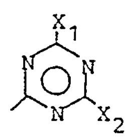 (II)

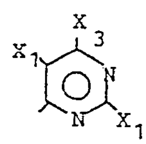 (III)

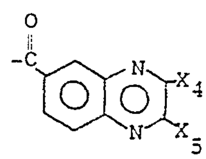 (IV)

$-SO_2-CH_2-CH_2-OSO_3H$ (V)

wherein in the formulae (II), (III) and (IV):
$X_1$ = Cl, F
$X_2$ = Cl, F, $NH_2$, NHR, OR, $CH_2R$ or SR
$X_3$ = Cl, F or $CH_3$

$X_4$ = Cl, F or $CH_3$
$X_5$ = Cl, F or $CH_3$
wherein $X_4$ and $X_5$ must not represent $CH_3$ at the same time and wherein R = alkyl, aryl and aralkyl.

## Revendications

1. Solutions de colorants, contenant

10-45% en poids d'un colorant réactif hydrosoluble
1-30% en poids de di(alkyle en $C_1$ à $C_4$)sulfone
25-89% en poids d'eau
0- 3% en poids de substances tampons ainsi que, le cas échéant, d'autres additifs hydrosolubles élevant la concentration.

2. Solutions de colorants suivant la revendication 1, caractérisées en ce que le colorant réactif est un colorant réactif anionique qui comporte un groupement réactif de l'une des formules suivantes:

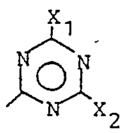

(II)

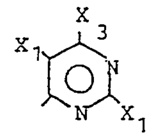

(III)

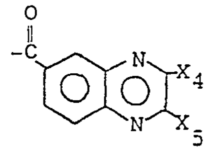

(IV)

$-SO_2-CH_2-CH_2-OSO_3H$ (V)

les symboles dans les formules (II), (III) et (IV) ayant les valeurs suivantes:
$X_1$ = Cl, F
$X_2$ = Cl, F, $NH_2$, NHR, OR, $CH_2R$, SR
$X_3$ = Cl, F, $CH_3$
$X_4$ = Cl, F, $CH_3$
$X_5$ = Cl, F, $CH_3$
$X_4$ et $X_5$ ne pouvant pas représenter simultanément un groupe $CH_3$ et R = alkyle, aryle, aralkyle.